# EUROPÄISCHE PATENTSCHRIFT

(11) **EP 1 186 820 B1**
(45) Veröffentlichungstag und Bekanntmachung des Hinweises auf die Patenterteilung: **16.04.2003**
(21) Anmeldenummer: 00119119.6
(22) Anmeldetag: 04.09.2000
(51) Int. Cl.: F16L 13/14, B21D 39/04

(54) **Vorrichtung zur Herstellung einer unlösbaren Verbindung zwischen dem Endbereich eines Rohres und einem Verbindungselement**
Device for forming a non-detatchable connection between a pipe end and a connector
Dispositif pour réaliser une liaison permanente entre l'extrémité d'un tuyau et un raccord

(43) Veröffentlichungstag der Anmeldung: 13.03.2002
(73) Patentinhaber: Knipping, Daniel, 41844 Wegberg-Holtum (DE)
(72) Erfinder: Knipping, Jochen, 41236 Mönchengladbach-Rheydt (DE)
(74) Vertreter: Beckmann, Jürgen, Dr.

(56) Entgegenhaltungen:
- EP-A- 0 259 010
- DE-A- 2 515 563
- DE-A- 19 545 361
- DE-A- 19 707 827
- GB-A- 1 542 847
- US-A- 3 689 111

## Beschreibung

Die Erfindung betrifft eine Vorrichtung zur Herstellung einer unlösbaren Verbindung zwischen dem Endbereich eines Rohres und einem in den Endbereich des Rohres eingeführten und/oder den Endbereich des Rohres umgebenden und in seinem der zu verbindenden Oberfläche des Rohres zugewandten Bereich Profilierungen aufweisenden Verbindungselement mittels eines das Rohr in dem den Profilierungen zugewandten Bereich plastisch verformenden Verformwerkzeugs.

Es ist bekannt, zur Aufbringung der Verformkraft ein zangenartig ausgebildetes Verformwerkzeug einzusetzen, so daß die Verformkräfte über die Wangen bzw. Backen der Zange aufgebracht werden. Hierbei ist von Nachteil, daß keine über den Umfang von 360° gleichförmige Verformung erreicht wird, da die kraftaufbringenden Elemente des Verformwerkzeugs mit vorgegebenen Konturen während des gesamten Verformvorgangs stets an der gleichen Stelle, nicht aber über den gesamten Umfang von 360° gleichförmig einwirken. In vielen Fällen ist man aus diesem Grunde dazu übergegangen, zur Erzielung einer gewünschten Dichtigkeit der Verbindung zwischen dem Rohr und dem Verbindungselement zusätzliche Dichtelemente, wie beispielsweise O-Ringe, einzulegen.

Zur Herstellung einer unlösbaren Verbindung zwischen einem Rohr und einem in das Rohr eingeführten und mit Profilierungen versehenem Verbindungselement ist es aus der US 3 689 111 bekannt, das Rohr im Bereich der Profilierungen plastisch zu verformen. Die Verformung geschieht dabei über zwei Walzen, von denen eine im zu verformenden Bereich eine Verdickung aufweist. Durch eine Rotation der beiden Walzenachsen um die Achse des zu verbindenden Rohres wird die Verformung des Rohres über dessen gesamten Umfang bewirkt. Die beiden Walzen sind dabei gegenüber einer axialen Verschiebung durch einen Wulst fixiert, welcher in eine zugehörige Nut des Verbindungselementes eingreift.

Aus der GB 1 542 847 ist ein Verformwerkzeug bekannt, welches durch die Abwandlung eines bekannten Rohrschneidegerätes entsteht. Anstelle der in einem solchen Rohrschneidegerät vorgesehenen runden Messer werden radförmige Wälzkörper eingesetzt. Ein zu verformendes Rohr muss dann in das geschlossene Auge des Verformwerkzeugs eingeschoben werden, woraufhin das Werkzeug an der gewünschten Position durch Anziehen einer Flügelmutter in Druckkontakt mit der Oberfläche des Rohres gebracht wird. Anschließend kann die Vorrichtung durch manuelles Verdrehen um das zu verbindende Rohr herumgeführt werden, wobei Wälzkörper über die Fläche des Rohres abrollen und dieses dabei verformen.

Ferner ist aus der DE 25 15 563 eine Vorrichtung zur Verbindung eines Schlauchendes mit einem in das Schlauchende eingeschobenen Rohrstück bekannt. Hierbei wird um das Schlauchende herum eine metallische Hülse angeordnet, welche mit der Vorrichtung zusammengepresst wird und hierdurch das Schlauchende auf dem Rohrstück fixiert. Das Zusammenpressen der Hülse geschieht über in Axialrichtung der Hülse verschobene Wälzkörper in Form von Rädern, welche in Richtung der Längsachse der Hülse auf dieser abrollen. Der radiale Abstand der Räder von der Achse der Hülse beziehungsweise des Schlauches kann durch eine entsprechende Führung verringert werden, um mit fortschreitender axialer Bewegung einen zunehmenden radialen Druck auf die Hülse auszuüben.

Der Erfindung liegt die Aufgabe zugrunde, eine Vorrichtung zu Schaffen , mit der eine über den Rohrumfang weitgehend gleichförmige Verformung des Rohres erreicht werden kann, wodurch eine über den Umfang absolut dichte unlösbare Verbindung erzielbar ist, ohne daß der Einsatz zusätzlicher Dichtelemente, wie etwa O-Ringe, erforderlich wäre.

Diese Aufgabe wird durch die Gegenstände mit den Merkmalen der unabhängigen Ansprüche gelöst. Vorteilhafte Ausgestaltungen sind in den Unteransprüchen enthalten.

Zur Lösung dieser Aufgabe ist erfindungsgemäß vorgesehen, daß auf die dem Verbindungselement gegenüberliegende Oberfläche des Rohres direkte oder indirekte radiale Preßkräfte während einer Relativbewegung der kraftaufbringenden Elemente des Verformwerkzeugs zu der diesen zugewandten Oberfläche der Anordnung RohrNerbindungselement aufgebracht werden, derart, daß in dem gewünschten Verbindungsbereich eine über den Rohrumfang weitgehend gleichförmige, der Profilierung des Verbindungselementes entsprechende plastische Verformung des Rohres erfolgt.

Die Einrichtungen zur einstellbaren Aufbringung radialer Kräfte weisen einen oder mehrere in einer Umlaufnut in der Umlaufbahn angeordnete, gegen die Wälzkörper auf ihrer der Anordnung Rohr/Verbindungselement abgewandten Seite anliegende Druckkörper auf, deren radiale Position durch Einwirkung von axial verstellbaren Keilkörpern bzw. schiefen Ebenen verstellbar ausgebildet ist. Vorzugsweise kann der Boden der Laufbahn in axialer Richtung entsprechend keilförmig ausgebildet sein, so daß auf diese Weise bei Verstellung der Keilkörper eine gleichmäßige Druckkraft ohne Verkantung der Wälzkörper erreicht wird.

Zur Verstellung der Keilkörper kann in zweckmäßiger Ausbildung der Erfindung in einer Richtung eine mechanisch und/oder hydraulisch arbeitende Verstelleinrichtung vorgesehen sein. Zur Verstellung der Keilkörper in der anderen Richtung kann eine beispielsweise Federn aufweisende Vorspanneinrichtung vorgesehen sein.

Die Wälzkörper können vielfältig ausgebildet sein, so beispielsweise in Form von Zylinderrollen, Nadeln, Kegelrollen, Tonnenrollen oder auch als Kugeln.

Eine vornehmlich zur Relativbewegung der kraftaufbringenden Elemente des Verformwerkzeugs zu der Anordnung Rohr/Verbindungselement in Achsrichtung des Rohres geeignete Vorrichtung kann derart ausgebildet sein, daß das Verformwerkzeug einen in seiner Wirkstellung ringartig oder hülsenartig ausgebildeten Verformkörper mit kleinerem Innendurchmesser als dem Außendurchmesser der Anordnung Rohr/Verbindungselement aufweist, und eine Einrichtung (z.B. ein Hintergriff) zur Arretierung des Verbindungselementes relativ zu dem Rohr und zur Gegenhalterung des Werkzeuges vorgesehen ist, und die kraftaufbringenden Elemente des Verformwerkzeugs über eine Antriebseinrichtung in Achsrichtung des Rohres bewegbar angeordnet sind. Eine derartige Vorrichtung kann beispielsweise so arbeiten, daß während des Aufsetzens oder nach dem Aufsetzen des ringartig oder hülsenartig ausgebildeten Verformwerkzeugs zunächst - also bevor die Bewegung in Achsrichtung erfolgt-das Rohr im Anfangsbereich der Verpressung in radialer Richtung nach innen verformt bzw. "eingeschnürt" wird, und daß dann dieser "eingeschnürte" Bereich mit seiner ganzen Tiefe über den gewünschten Verbindungsbereich in axialer Richtung weiterbewegt wird, so daß auf diese Weise über die gesamte Länge des gewünschten Verbindungsbereiches eine radiale Verformung des Rohres in der gewünschten Weise erfolgt. Vorzugsweise kann diese Vorrichtung während ihrer Anwendung auch um die Achse gedreht werden, so daß eine besonders gleichmäßige Verformung entsteht.

Dieser Vorgang kann mit einem Verformwerkzeug erfolgen oder aber auch mittels zweier gesonderter Werkzeuge. In diesem Fall kann mit einem Vormontagewerkzeug zunächst eine sich über den Umfang erstreckende radiale Verformung oder "Einschnürung" erzeugt werden, in die dann anschließend ein Hauptverformwerkzeug eingreift, mit welchem die axiale Verpressung über den gewünschten Verbindungsbereich vorgenommen wird. Dies ermöglicht beispielsweise eine einfache Vormontage mehrerer Verrohrungsbereiche derart, daß dadurch eine komplett selbsttragend ausgebildete Vorinstallation erreicht werden kann, an die sich dann eine endgültige Verpressung mit dem Hauptverformwerkzeug anschließt.

Weiterhin kann vorgesehen sein, daß zwischen dem Verformkörper und der zu verformenden Oberfläche ein Quetschring eingebracht ist. Dieser kann so ausgebildet sein, daß er in Längsrichtung gesehen wenigstens zwei unterschiedliche Außendurchmesser aufweist, deren Verbindungsbereich in zweckmäßiger Weise konisch ausgebildet ist. Es ist zweckmäßig, wenn der Innendurchmesser des hülsenartig ausgebildeten Verformkörpers dem kleineren Außendurchmesser des Quetschringes entspricht, so daß der Verformkörper problemlos auf diesen kleineren Bereich aufgebracht werden kann und dann axial in Richtung des größeren Außendurchmessers des Quetschringes bewegt werden kann. Dadurch wird der Quetschring bei axialer Bewegung des hülsenartigen Verformwerkzeugs radial nach innen verformt. Dies hat gleichzeitig zur Folge, daß dadurch auch die Anordnung Rohr/Verbindungselement derart verformt wird, daß über den Rohrumfang eine weitgehend gleichförmige, der Profilierung des Verbindungselementes entsprechende plastische Verformung des Rohres in dem gewünschten Verbindungsbereich erzielt wird.

Der hülsenartig bzw. ringartig ausgebildete Verformkörper kann in zweckmäßiger Ausgestaltung der Erfindung so gestaltet sein, daß er zwei verschwenkbar miteinander verbundene und in Wirkstellung ohne praktisch wahrnehmbaren Spalt verbindbare, miteinander verriegelbare Verformungsteile aufweist, derart, daß das Rohr in Wirkstellung des hülsenartig bzw. ringartig ausgebildeten Verformkörpers über seinen gesamten Umfang praktisch gleichmäßig von den hülsenartig bzw. ringartig ausgebildeten Verformkörper umgeben ist. Die aufzubringenden Kräfte können dabei direkt auf das Rohr aufgebracht werden, oder es kann vorgesehen sein, daß die Kräfte unter Zwischenschaltung einer im Ergebnis auf dem Rohr verbleibenden Quetschhülse auf dieses aufgebracht werden. Eine zusätzliche Funktion dieser Quetschhülse besteht darin, bei hohen Innendruckbelastungen eine kraft- und formschlüssige sowie dichte Pressung dauerhaft zu gewährleisten.

In zweckmäßiger Ausgestaltung der Erfindung können weiterhin Einrichtungen zur Feststellung der Rohreinstecktiefe vorgesehen sein. So können Sichtfenster vorgesehen sein, in denen bei Erreichen einer bestimmten Rohreinstecktiefe eine Rohrmarkierung erscheint. Es kann auch eine Kennzeichnung des eingeschobenen Rohres durch geeignete und z.B. farbige Markierungsmittel wie Filzstifte, farbgetränkte Einlagen oder dergleichen erfolgen, so daß ein unbeabsichtigtes Zurückziehen des Rohres vom Verbindungselement vor der Verpressung am Auftauchen der Farbmarkierung erkennbar ist. Ebenso können Einlagen (z.B. aus Filz oder Gummi) als Stopper verwendet werden, um die Rohre in ihrer korrekten Montageposition zu halten.

Wenn das Verbindungselement ein in das innere des Rohres eingreifendes Innenteil und ein das Rohrende umfassendes Außenteil aufweist, so können diese Teile in ihren einander zugewandten Flächen miteinander verlötet sein oder durch einen O-Ring gegeneinander abgedichtet und gegenüber axialen Verschiebungen gesichert werden.

Zusätzliche, nach der Herstellung der Verbindung verbleibende Quetschringe, sind insbesondere dann zweckmäßig, wenn es sich um Rohre (beispielsweise sog. PEX-Rohre), die einen sog. Memory-Effekt aufweisen, oder Kunststoff- oder Mehrschichtverbundrohre handelt.

Das Verbindungsteil kann eine Verdrehsicherung aufweisen, die beispielsweise in Form einer starken Rändelung oder in Form von Kerben in axialer Richtung ausgebildet sein kann. Hierdurch wird eine unerwünschte Drehung des Verbindungsteiles gegenüber dem Rohr verhindert.

In vorteilhafter Ausgestaltung der Erfindung kann das Verbindungsteil aus einem Sulfonpolymer-Kunststoff bzw. einem Kunststoff aus der Polysulfonfamilie gefertigt sein, beispielsweise dem Kunststoff RadelR PPSU 5100 (Produktname der Amoco Chemical Deutschland GmbH, Düsseldorf).

Selbstverständlich besteht auch die Möglichkeit, zur zusätzlichen Abdichtung einen oder mehrere O-Ringe oder andere Dichtelemente zwischen dem Rohr und dem Verbindungselement vorzusehen.

Weitere Einzelheiten, Vorteile und Merkmale ergeben sich aus den Patentansprüchen und den beigefügten Zeichnungen. Es zeigen:
- Fig. 1: eine perspektivische Darstellung - teilweise im Schnitt - eines ersten Ausführungsbeispiels der Erfindung;
- Fig. 2 und 2a: jeweils einen Schnitt entlang der Linie V-V gemäß Fig. 1 im geschlossenen und geöffneten Zustand des Verformwerkzeugs;
- Fig. 3: einen Schnitt entlang der Linie VI-VI gemäß Fig. 1;
- Fig. 4 bis Fig. 6: Druckkörpervarianten;
- Fig. 7 und 8: alternative Druckkörperanordnungen;
- Fig. 9: eine schematische Darstellung einer Anordnung RohrNerbindungselement mit einer darüber dargestellten Werkzeuganordnung;
- Fig. 10: eine schematische Darstellung Rohr/Verbindungselement;
- Fig. 11: eine Ansicht einer alternativen Verpressungsform;
- Fig. 12 und 13: Ansichten alternativer Verpressungsformen jeweils ohne Verwendung einer Stützhülse;
- Fig. 14: eine Darstellung entsprechend Fig. 10, jedoch mit einer zusätzlich vorgesehenen Verdrehsicherung;
- Fig. 15: eine Anordnung mit zweiteilig ausgebildetem Verbindungselement;
- Fig. 16 und Fig. 16a: eine Darstellung entsprechend Fig. 15 mit außenseitig angeordneter Verdrehsicherung;
- Fig. 17 und Fig. 17a: eine entsprechende Darstellung mit innenseitig angeordneter Verdrehsicherung;
- Fig. 18: eine Darstellung entsprechend Fig. 15 mit einer Silikonaufbringung als Rutschbremse;
- Fig. 19: eine Darstellung entsprechend Fig. 18 mit einer Anschrägung als Rutschbremse;
- Fig. 20: eine Darstellung entsprechend Fig. 19 mit einer Hinterdrehung des Verbindungselementes;
- Fig. 21: eine schematische Darstellung RohrNerbindungselement mit angesetztem Verformwerkzeug, wobei links ein Rohrende unverformt und rechts ein Rohrende verformt dargestellt ist;
- Fig. 22: eine Darstellung entsprechend Fig. 21 mit vorderen Verdrehsicherungen;
- Fig. 23: eine Darstellung entsprechend Fig. 22 mit hinteren Verdrehsicherungen;
- Fig. 24: eine Anordnung entsprechend Fig. 21 mit Quetschring;
- Fig. 25: eine Variante der Ausführung gemäß Fig. 24 mit profiliertem Quetschring;
- Fig. 26: eine Variante mit in den Endbereichen als Sechskant ausgebildetem Quetschring;
- Fig. 27: eine Ausführungsform mit zylinderförmigen Wälzkörpern mit glatter Oberfläche;
- Fig. 28: eine Ausführungsform mit Wälzkörpern mit profiliert ausgebildeten Oberflächen;
- Fig. 29: eine weitere Ausführungsform mit profiliert ausgebildetem Quetschring;
- Fig. 30: eine schematische Darstellung eines Verformvorganges.

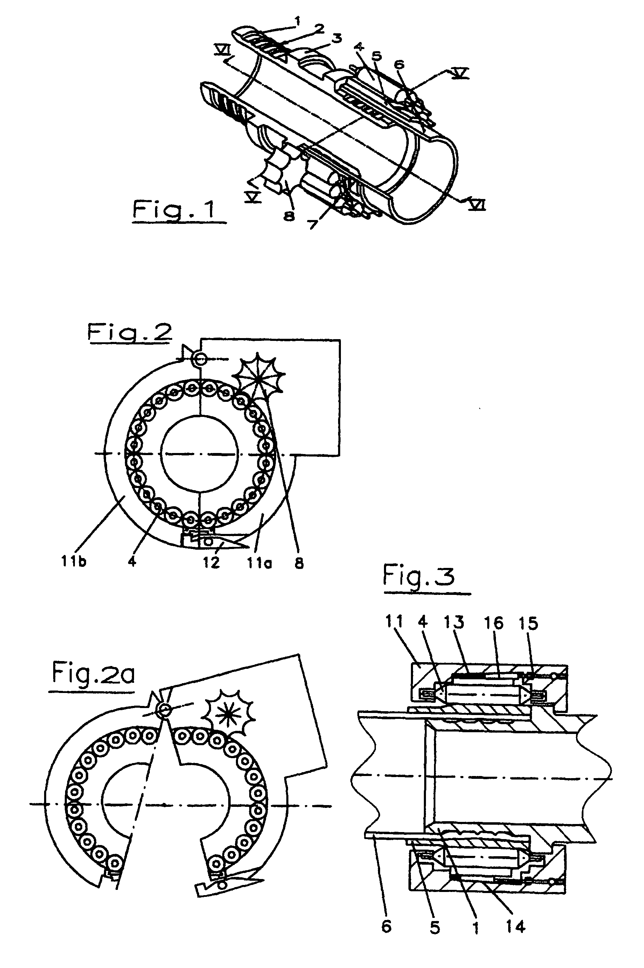

Fig. 1 zeigt eine schematische perspektivische Darstellung - teilweise im Schnitt-eines Ausführungsbeispiels der Erfindung. Hierbei werden in einer Laufbahn einer (nicht dargestellten) Wälzkörperhalterung umlaufbar angeordnete Wälzkörper 4 über ein Zahnrad 8 angetrieben, derart, daß sie sich um die Längsachse eines Endbereiches eines Rohres 6 drehen, welches mit einem an seiner Außenseite Profilierungen 2 aufweisenden Verbindungselement 1 verbunden werden soll. Das Verbindungselement 1 ist In den Endbereich des Rohres 6 eingeführt. Zwischen den Wälzkörpern und dem Außenumfang des Verbindungsbereiches des Rohres befindet sich ein Quetschring 5. In der (nicht dargestellten) Wälzkörperhalterung befindet sich eine Zustellung, zum Beispiel in Form einer schiefen Ebene, durch die der Gehäusedurchmesser verjüngt wird und somit die Wälzkörper bei Antrieb radial nach innen getrieben werden. Dadurch wird das Rohr - im dargestellten Fall mit Hilfe des Quetschrings 5, der zudem eine Verdrehsicherung 7 beinhaltet-verformt, und es wird ein fester, formschlüssiger, über den gesamten Umfang gleichmäßiger Verbund des Rohres mit dem Verbindungselement erzeugt. Die Verdrehsicherung 7 weist mindestens einen Anschlag bzw. eine Haltefläche zum Eingriff für das Verformwerkzeug auf, damit sich der Quetschring 5 nicht zusammen mit den Wälzkörpern 4 dreht.

In den Fig. 2 und 2a ist jeweils schematisch ein Schnitt entlang der Linie V-V entsprechend Fig. 1 zu sehen, wobei die Wälzkörperhalterung in Schließstellung (Fig. 2) und in Öffnungsstellung (Fig. 2a) gezeigt ist. In Schließstellung (Wirkstellung) sind die gegeneinander anliegenden Halteteile 11a und 11b über eine Verriegelungseinrichtung 12 miteinander verriegelt.

Fig. 3 zeigt einen schematischen Schnitt entlang der Linie VI-VI durch Teilbereiche der Fig. 1. In einen Endbereich eines Rohres 6 (links dargestellt) ist ein Verbindungselement 1 eingeschoben. Im unteren Bereich ist das Rohr entsprechend den Außenprofilierungen des Verbindungselementes verformt dargestellt, und im oberen Bereich unverformt. In einer die Anordnung umgebenden Wälzkörperhalterung 11 sind Wälzkörper 4 in einer Umlaufbahn und verdrehbar geführt. Zwischen den Wälzkörpem und dem Außenumfang des Verbindungsbereiches des Rohres befindet sich ein schraffiert dargestellter Quetschring 5. Der Außenumfang der Wälzkörper wird von einem in seinem Innendurchmesser und Aüßendurchmesser veränderbaren Ringelement 16 umgeben, welches als Druckkörper wirkt. Der Durchmesser des Druckkörpers wird durch die Wirkung axial verstellbarer Keile 14 verändert. Die Keile sind beispielsweise über eine hydraulische Verstelleinrichtung mit einer Kolbenstange 15 (rechts oben dargestellt) entsprechend der zeichnerischen Darstellung nach links verschiebbar. Alternativ kann auch eine Gewindezustellung Verwendung finden. Links an den Keil anschließend (dunkler Bereich) befindet sich eine Rückstellanordnung 13 (z.B. eine Feder). Durch Verstellung der Keile wird der Außendurchmesser und der Innendurchmesser des Druckkörpers 16 verkleinert. Dementsprechend werden die Wälzkörper 4 radial in den Quetschring 5 gedrückt, mit dem Ergebnis, daß sich der Endbereich des Rohres entsprechend der Profilierung des Verbindungselementes 1 in dem Verbindungsbereich über seinen gesamten Umfang gleichmäßig verformt.

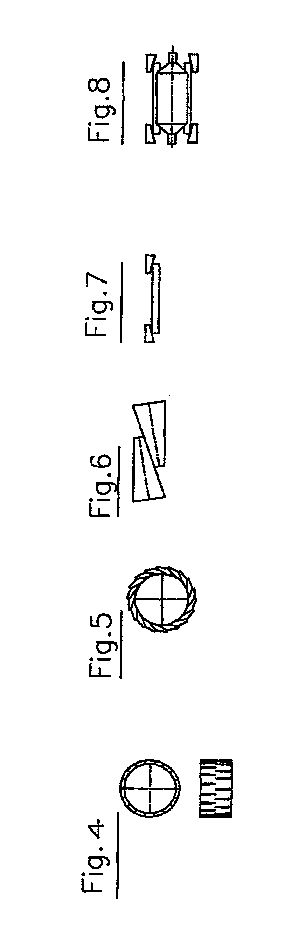

Aus den Fig. 4 bis Fig. 8 sind Druckkörpervarianten entnehmbar, die anstelle der Ringelemente 16 bzw. der Keile 14 eingesetzt werden können, wobei in Fig. 4 eine Art Lamellenkupplung gezeigt ist, in Fig. 5 einzelne Segmente, die sich ineinanderschieben können und letztlich eine gleichmäßige Kontur ergeben, und in Fig. 6 Kegelwalzen, die gegeneinander verschoben werden.

Weiterhin ist es denkbar, die Wälzkörper in zwei mit ihren Öffnungen einander zugewandten Führungstöpfen mit jeweils konischer Innenfläche zu führen, wobei sich durch eine Verringerung des axialen Abstandes der Führungstöpfe der Radius der Abrollkreise der Wälzkörper verringert (vgl. Fig. 7).

Der Radius der Abrollkreise der Wälzkörper kann weiterhin entsprechend der Ausführungsform gemäß Fig. 8 dadurch verändert werden, daß die Wälzkörper an der dem Quetschring abgewandten Seite jeweils gegen ein Paar von Stützwälzkörpern anliegen, die zwangsweise auf einer Kreisbahn geführt sind und deren Anstand auf dieser Kreisbahn durch Keileinrichtungen verändert werden kann. Durch Verringerung des Abstandes der Stützwälzkörper werden die Wälzkörper nach innen gedrängt, wodurch eine Verformung bewirkt wird.

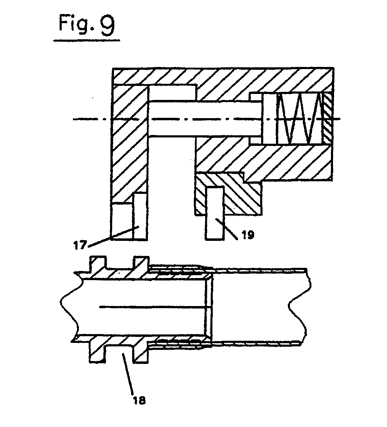

Fig. 9 ist eine schematische Darstellung einer Anordnung RohrNerbindungselement und einer darüber dargestellten Werkzeuganordnung. Die Werkzeuganordnung weist in ihrem linken unteren Bereich ein Klappsegment 17 zum Eingreifen in die darunter dargestellte nutförmige Vertiefung 18 (sog. "Hintergriff') der Anordnung Rohr/Verbindungselement auf. Im rechten unteren Bereich ist ein weiteres Klappsegment 19 dargestellt.

Bei allen in den Figuren 1 bis 9 dargestellten Vorrichtungen kann während des Verformens sowohl eine axiale Verschiebebewegung als auch eine Verdrehung zwischen den kraftaufbringenden Elementen und der Anordnung RohrNerbindungselement stattfinden, was die Gleichmäßigkeit der Verformung erhöht.

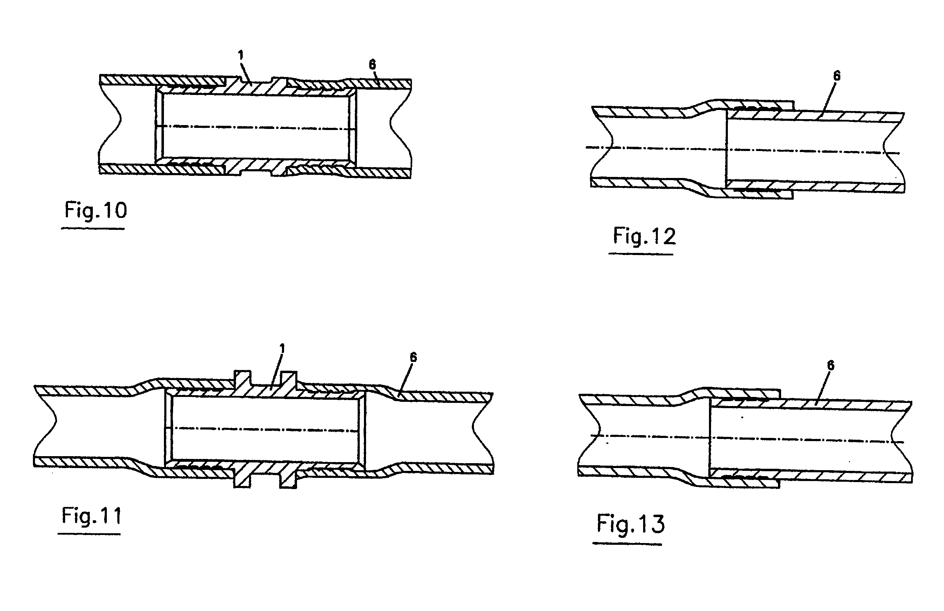

Fig. 10 ist eine schematische Darstellung Rohr/Verbindungselement, wobei im linken Bereich die Anordnung unverpreßt und im rechten Bereich die Anordnung verpreßt dargestellt ist. Das Verbindungselement 1, hier mit Innenprofilierungen, umgibt den zu verbindenden Endbereich des Rohres 6.

Im allgemeinen wird zur Herstellung der Rohrverbindung eine Stützhülse od. dgl. als Verbindungsteil verwendet. Bei bestimmten Anwendungen kann jedoch auch ein mit dem Rohrende zu verbindendes zweites Rohrende anstelle einer Stützhülse oder dgl. als Verbindungsteil verwendet werden, wie in den Ausführungsformen gemäß Fig. 12 und 13 dargestellt. Bei einer derartigen Variante können somit zwei Rohrenden ohne zusätzliche Elemente miteinander verbunden werden. Hierzu wird - zur Verbindung von Rohren gleichen Durchmessers - vorzugsweise ein Rohrende vor Herstellung der Verbindung aufgeweitet, über das andere Rohrende geschoben und durch das Verformwerkzeug in einem oder mehreren axialen Abschnitten des Verbindungsbereiches radial umlaufend deformiert. Die erfindungsgemäß hergestellte radial umlaufende Deformation bzw. die radial umlaufenden Deformationen bewirkt bzw. bewirken dann - da die Deformation über den ganzen Umfang gleichmäßig erfolgt - sowohl eine Verbindung als auch eine Abdichtung der Rohrenden untereinander. Gemäß Fig. 12 können vor Herstellung der Verbindung - beispielsweise gleichzeitig mit dem Aufweitvorgang - an der Innenwandung des äußeren Rohres umlaufende Rillen erzeugt werden, in die sich das Material des inneren Rohres beim Verpreßvorgang hineindrückt, um die Rohrverbindung zu stabilisieren und abzudichten. Alternativ können die umlaufenden Rillen auch auf der Außenwandung des inneren Rohrs aufgebracht werden, wie in Fig. 13 dargestellt. Es ist auch denkbar, an beiden gegeneinanderliegenden Rohrwandungen jeweils versetzt angeordnete Rillen vorzusehen.

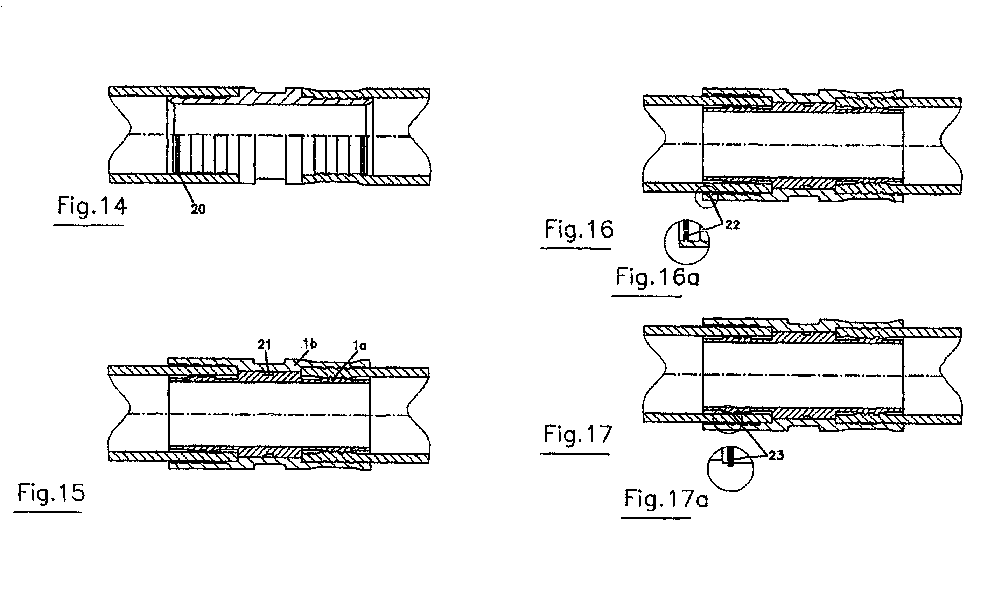

Fig. 14 ist eine Darstellung entsprechend Fig. 10, jedoch mit einer zusätzlich vorgesehenen Verdrehsicherung 20, die eine Relativdrehung zwischen Verbindungselement und Rohr verhindern soll.

Fig. 15 betrifft eine Anordnung, bei der das Verbindungselement zweiteilig aus einem Innenteil 1a und einem Außenteil 1b ausgebildet ist und die damit zu verbindenden Rohrendbereiche innen und außen umgibt. Etwa in der Mitte des Innenteils der Verbindungselementes befindet sich eine Nut 21, welche zur Aufbringung eines O-Ringes oder als Lötgutnut dient.

Fig. 16 und Fig. 16a sind Darstellungen entsprechend Fig. 15, jedoch mit einer außenseitig angeordneten Verdrehsicherung 22 des Verbindungselementes (Fig. 16a).

Fig. 17 und Fig. 17a sind entsprechende Darstellungen, jedoch mit einer innenseitig angeordneten Verdrehsicherung 23.

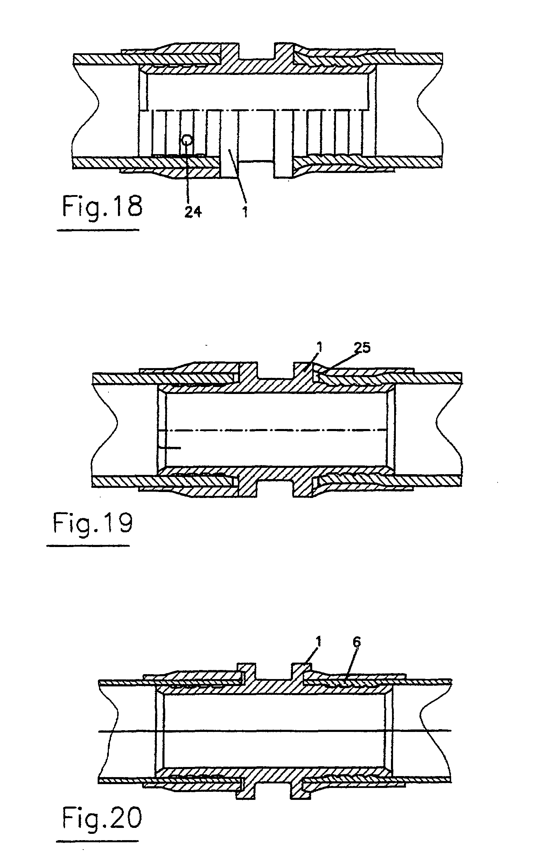

Fig. 18 ist eine Darstellung entsprechend Fig. 15, jedoch mit einer im Bereich der Profilierung des Innenteils des Verbindungselementes 1 vorgesehenen Silikonaufbringung 24 als Rutschbremse.

Fig. 19 ist eine Darstellung entsprechend Fig. 18, wobei das Innenteil des Verbindungselementes 1 jeweils eine als Rutschbremse wirkende Anschrägung 25 aufweist.

Fig. 20 ist eine Darstellung entsprechend Fig. 19. Hierbei greift das Stirnende des zu verbindenden Rohres 6 in eine Hinterdrehung des Verbindungselementes ein, wodurch das Widerstandsmoment gegen Biegung vergrößert wird.

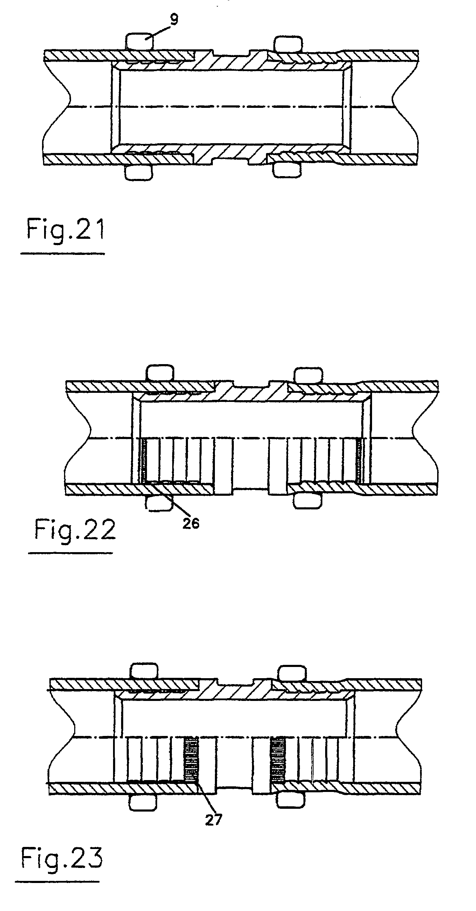

Fig. 21 zeigt eine schematische Darstellung Rohr/Verbindungselement, wobei links ein Rohrende unverformt und rechts ein Rohrende verformt dargestellt ist. Die jeweiligen Rohrenden sind von kraftaufbringenden Elementen 9 von Verformwerkzeugen umgeben, welche zur Verformung axial bewegt werden.

Fig. 22 zeigt eine Darstellung entsprechend Fig. 21, jedoch mit jeweils vorgesehener Verdrehsicherung 26 im vorderen Bereich des Verbindungselementes. Diese Verdrehsicherung kann z.B. als Rändelung ausgebildet sein.

Fig. 23 zeigt eine Darstellung entsprechend Fig. 22, jedoch mit Verdrehsicherungseinrichtungen 27 im hinteren Bereich des Verbindungselementes.

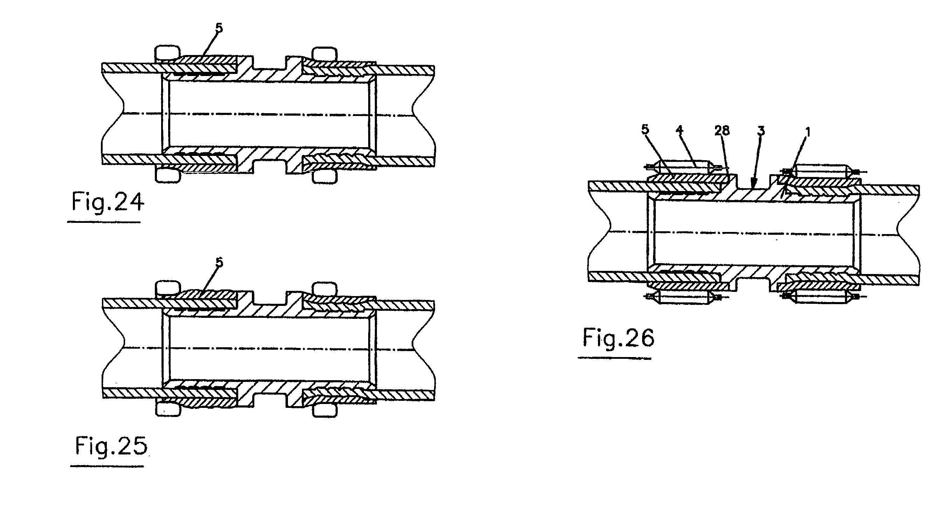

Fig. 24 zeigt eine Anordnung entsprechend Fig. 21, jedoch mit zusätzlich vorgesehener Quetschhülse 5 zwischen Verformwerkzeug und Rohr.

Fig. 25 zeigt eine Variante der Ausführung gemäß Fig. 24 mit profiliertem Quetschring 5.

Fig. 26 ist eine Variante derjenigen Ausführungsform, bei der die kraftaufbringenden Elemente während der radialen Kraftaufbringung relativ zueinander um die Achse des Rohres verdreht werden, und zwar ist zwischen den Wälzkörpern 4 und der Oberfläche des zu verformenden Rohr-Endbereiches ein Quetschring 5 angeordnet, der in seinen axialen Endbereichen eine als Sechskant ausgebildete Verdrehsicherung 28 aufweist. Ein Gegenstück hierfür befindet sich beispielsweise an der flanschartig ausgebildeten Stützhülse 3 des Verbindungselementes 1. .

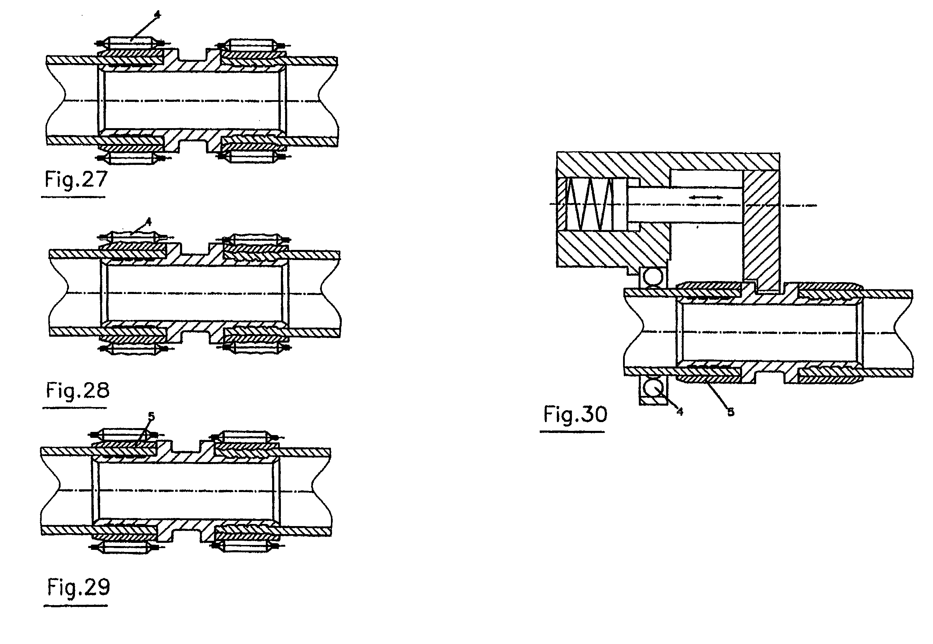

Fig. 27 ist die Darstellung entsprechend Fig. 26 einer Ausführungsform mit zylinderförmigen Wälzkörpern 4 mit glatter Oberfläche.

Fig. 28 ist eine Ausführungsform entsprechend Fig. 27 mit Wälzkörpern 4 mit profiliert ausgebildeten Oberflächen.

Fig. 29 ist eine weitere Ausführungsform entsprechend Fig. 27 mit profiliert ausgebildetem Quetschring 5.

Fig. 30 gibt eine schematische Darstellung eines Verformvorganges wieder, bei dem eine Wälzkörperanordnung mit kugelförmigen Wälzkörpern 4 mit Drehantrieb axial über einen Quetschring 5 geschoben wird und dementsprechend die kraftaufbringenden Elemente des Verformwerkzeugs und die Anordnung Rohr/Verbindungselement während der radialen Kraftaufbringung relativ zueinander um die Achse des Rohres verdreht und gleichzeitig in Achsrichtung des Rohres relativ zueinander bewegt werden. Wenn ein Quetschring vorhanden oder das Rohrende aufgeweitet ist, ist bei dieser Ausführungsform keine radial gerichtete Zustellung der Wälzkörper erforderlich. Die erforderliche Verpressungstiefe wird in einem Arbeitsgang erreicht.

## Patentansprüche

1. Vorrichtung zur Herstellung einer unlösbaren Verbindung zwischen dem Endbereich eines Rohres und einem im Endbereich des Rohres befindlichen und Profilierungen aufweisenden Verbindungselement durch plastische Verformung des Rohres in dem den Profilierungen zugewandten Bereich,
wobei
- die Vorrichtung eine Anzahl von in Wirkposition zur Anlage gegen die Anordnung Rohr/Verbindungselement vorgesehenen Wälzkörpern (4) aufweist,
- die Wälzkörper in einer in ihrer Wirkposition den Umfang der Anordnung Rohr/Verbindungselement umschließenden Wälzkörperhalterung über eine Verdreheinrichtung (8) verdrehbar gelagert angeordnet sind,
- Einrichtungen (13, 14, 15, 16) zur einstellbaren Aufbringung radialer Kräfte auf die Wälzkörper vorgesehen sind,
- die Wälzkörperhalterung schwenkbar miteinander verbindbare und in ihrer Wirkposition gegeneinander verriegelbare Halteteile (11a, 11b) aufweist,
**dadurch gekennzeichnet, dass**
- die Wälzkörper (4) in einer in ihrer Wirkposition den Umfang des Rohres (6) umgebenden und an der Wälzkörperhalterung ausgebildeten Laufbahn angeordnet sind,
- die Drehantriebseinrichtung (8) zur Bewegung der Wälzkörper in der Laufbahn vorgesehen ist,
- die Einrichtungen zur einstellbaren Aufbringung radialer Kräfte in einer Umlaufnut in der Laufbahn angeordnete, gegen die Wälzkörper (4) auf ihrer der Anordnung Rohr/Verbindungselement abgewandten Seite anliegende Druckkörper (16) aufweisen, deren radiale Position verstellbar ausgebildet ist.

2. Vorrichtung nach Anspruch 1, **dadurch gekennzeichnet, daß** die radiale Position der Druckkörper (16) durch Einwirkung von axial verstellbaren Keilkörpern (14) verstellbar ausgebildet ist.

3. Vorrichtung nach Anspruch 2, **dadurch gekennzeichnet, daß** zur Verstellung der Keilkörper (14) in einer Richtung eine mechanisch und/oder hydraulisch arbeitende Verstelleinrichtung (15) vorgesehen ist, und daß zur Verstellung der Keilkörper in der anderen Richtung eine Vorspanneinrichtung (13) vorgesehen ist.

## Claims

1. Apparatus for producing a non-detachable connection between the end region of a pipe and a connection element, which is situated in the end region of the pipe and has contours, by plastic deformation of the pipe in the region facing the contours, wherein
- the apparatus comprises a number of rolling bodies (4), which in active position are intended for application against the pipe/connection element arrangement,
- the rolling bodies are disposed so as to be mounted rotatably by means of a rotation device (8) in a rolling body mounting, which in the active position of the rolling bodies encloses the periphery of the pipe/connection element arrangement,
- devices (13, 14, 15, 16) are provided for adjustably exerting radial forces upon the rolling bodies,
- the rolling body mounting comprises holding parts (11a, 11b), which are pivotally connectable to one another and mutually lockable in their active position,
**characterized in that**
- the rolling bodies (4) are disposed in a track, which in their active position surrounds the periphery of the pipe (6) and is formed on the rolling body mounting,
- the rotary drive device (8) is provided for moving the rolling bodies in the track,
- the devices for adjustably exerting radial forces comprise thrust bodies (16), which are disposed in an annular groove in the track and lie against the rolling bodies (4) at their side remote from the pipe/connection element arrangement and of which the radial position is designed so as to be adjustable.

2. Apparatus according to claim 1, **characterized in that** the radial position of the thrust bodies (16) is designed so as to be adjustable under the action of axially adjustable wedge bodies (14).

3. Apparatus according to claim 2, **characterized in that** for adjusting the wedge bodies (14) in one direction a mechanically and/or hydraulically operating adjusting device (15) is provided, and that for adjusting the wedge bodies in the other direction a preloading device (13) is provided.

## Revendications

1. Dispositif pour établir une liaison inamovible entre la partie d'extrémité d'un tuyau et un élément de liaison inséré dans la partie d'extrémité du tuyau et présentant des profilages, par déformation plastique du tuyau dans la zone tournée vers les profilages, sachant que
- le dispositif comporte plusieurs corps de roulement (4) prévus pour venir s'appliquer en position active contre le dispositif tuyau/élément de liaison,
- les corps de roulement sont logés de façon à pouvoir tourner par l'intermédiaire d'un dispositif de rotation (8) dans un support de corps de roulement entourant en position active le pourtour du dispositif tuyau/élément de liaison,
- des dispositifs (13, 14, 15, 16) sont prévus pour exercer des forces radiales réglables sur les corps de roulement,
- le support des corps de roulement présente des éléments de fixation (11a, 11b) pouvant être reliés entre eux de façon pivotante et verrouillés l'un à l'autre en position active,
**caractérisé en ce que**
- les corps de roulement (4) sont placés dans une glissière réalisée sur le support des corps de roulement, qui entoure le pourtour du tuyau (6) lorsque les corps de roulement sont en position active,
- le dispositif d'entraînement en rotation (8) est prévu pour déplacer les corps de roulement dans la glissière,
- les dispositifs pour appliquer des forces radiales réglables présentent des corps presseurs (16) logés dans une rainure circulaire de la glissière et appliqués contre les corps de roulement (4) avec leur côté opposé au dispositif tuyau/élément de liaison, dont la position radiale est réglable.

2. Dispositif selon la revendication 1, **caractérisé en ce que** la position radiale des corps presseurs (16) peut être réglée par l'action de coins (14) mobiles axialement.

3. Dispositif selon la revendication 2, **caractérisé en ce que**, pour déplacer les coins (14) dans un sens, il est prévu un dispositif de déplacement hydraulique et/ou mécanique (15) et **en ce que**, pour déplacer les coins dans l'autre sens, il est prévu un dispositif de précontrainte (13).
